# EUROPÄISCHE PATENTANMELDUNG

(11) **EP 0 918 383 A2**
(43) Veröffentlichungstag der Anmeldung: **26.05.1999**
(21) Anmeldenummer: 98119858.3
(22) Anmeldetag: 20.10.1998
(51) Int. Cl.: H01S 3/11

(54) **Pulslaser mit Erstpulssteuerung**

(30) Priorität: 24.10.1997 DE 19747180
(71) Anmelder: Coherent Lübeck GmbH, 23569 Lübeck (DE)
(72) Erfinder: Elm von, Rüdiger Dr., 24211 Kühren (DE); Kneip Axel, 24107 Kiel (DE)
(74) Vertreter: Klunker . Schmitt-Nilson . Hirsch

(57) **Zusammenfassung**

Die Erfindung betrifft einen Pulslaser mit einer Pumpquelle, einem aktiven Lasermaterial, einem Güteschalter mit einem Ein-Zustand, in dem er weitgehend lichtdurchlässig und einem Aus-Zustand, indem er weitgehend lichtundurchlässig eingestellt wird, einem Gatesignal zum Umschalten des Pulslasers zwischen inaktivem Betrieb und Pulsbetrieb und einer Erstpulssteuerung zur Steuerung der Erstpulsenergie.

Ein solcher Pulslaser soll dahingehend verbessert werden, daß sich die Energie des ersten ausgesandten Laserpulses nicht wesentlich von der Energie der restlichen Pulse einer Pulsfolge unterscheidet wobei die Pumpquelle nicht längere Zeit mit verminderter Leistung betrieben werden soll.

Die Verbesserung wird z.B. erzielt, indem mittels einer Erstpulssteuerung 6 während des inaktiven Betriebs des Pulslasers die Aufladung des aktiven Lasermaterials 2 durch Prelasing auf den Spitzenwert der Aufladung während des Pulsbetriebes gehalten wird, oder indem nach dem Umschalten auf Pulsbetrieb die Aufladung des aktiven Lasermaterials 2 durch Prelasing oder durch Reduktion der Pumpleistung der Pumpquelle 5 abgebaut wird und die Triggerung des ersten Laserpulses einer Pulsfolge solange verzögert wird, bis die Aufladung den Wert erreicht hat, der während einer Pulsfolge als Spitzenwert vorliegt. In den Ansprüchen sind weitere Ausführungsformen der Erfindung beschrieben.

## Beschreibung

Die Erfindung betrifft einen Pulslaser mit einer Pumpquelle, einem aktiven Lasermaterial, einem Güteschalter mit einem Ein-Zustand, in dem er weitgehend lichtdurchlässig und einem Aus-Zustand, indem er weitgehend lichtundurchlässig eingestellt wird, einem Gatesignal zum Umschalten des Pulslasers zwischen inaktivem Betrieb und Pulsbetrieb und einer Erstpulssteuerung zur Steuerung der Erstpulsenergie.

Pulslaser können von einem inaktiven Betrieb, in dem sie betriebsbereit sind, aber keine Laserstrahlung aussenden, in einen Pulsbetrieb, in dem sie einen Puls oder eine Serie von Pulsen aussenden, durch Ansteuerung eines Gates umschaltbar sein. Die Pulse werden dabei durch eine Triggerung einzeln oder in fester Folge ausgelöst. Während des inaktiven Betriebs ist das aktive Lasermaterial durch die Pumpquelle auf einem Maximalwert aufgeladen. Nach dem Umschalten des Pulslasers auf Pulsbetrieb reduziert der erste ausgelöste Laserpuls die Aufladung sehr stark (im allgemeinen fast auf Null), danach baut sie sich mit einer gewissen Zeitkonstanten wieder auf. Werden weitere Laserpulse ausgelöst, bevor die Aufladung wieder nahezu ihren Maximalwert erreicht hat, so ergibt sich ein sägezahnähnlicher Zeitverlauf der Aufladung mit Spitzenwerten, die unter dem Maximalwert der Aufladung liegen. Dadurch ist die Energie des ersten Laserpulses gegenüber der Energie der weiteren Laserpulse überhöht. Die Überhöhung fällt um so stärker aus, je kurzer der zeitliche Abstand der Laserpulse im Verhältnis zu der Zeitkonstanten der Aufladung des aktiven Lasermaterials ist. Der beschriebene Effekt ist in vielen Anwendungen von Pulslasern unerwünscht und muß mit einer Erstpulssteuerung verhindert werden.

In der US 5,225,051 ist ein Pulslaser beschrieben, bei dem die Pumpleistung der Pumpquelle reduziert wird, falls der zeitliche Abstand zweier aufeinanderfolgender Laserpulse einen Grenzwert überschreitet. Damit wird die maximale Aufladung des aktiven Lasermaterials etwa auf einen Wert begrenzt, der während einer kontinuierlichen Pulsfolge als Spitzenwert vorliegt.

Nachteilig an dem bekannten Pulslaser ist, daß die Leistung der Pumpquelle sehr schnell und präzise über einen weiten Bereich gesteuert werden muß, was einerseits einen hohen technischen Aufwand erfordert und andererseits nur bei bestimmten Pumpquellen überhaupt realisierbar ist. Bei dem bekannten Pumplaser muß die Pumpquelle während des inaktiven Betriebs mit stark verminderter Pumpleistung betrieben werden, was bei einigen Pumpquellen mit einer unerwünschten Änderung der Eigenschaften (z. B. die Pumpwellenlänge bei Laserdioden) verbunden ist. Nach dem Umschalten auf Pulsbetrieb muß sich die Pumpquelle erst wieder auf einen neuen Zustand stabilisieren, wodurch der erste Teil einer von dem Laser ausgesandten Pulsfolge instabil sein kann.

Aufgabe der Erfindung ist es, einen Pulslaser der genannten Art anzugeben, bei dem sich die Energie des ersten ausgesandten Laserpulses nicht wesentlich von der Energie der restlichen Pulse einer Pulsfolge unterscheidet und bei dem die Nachteile des bekannten Pulslasers vermieden werden.

Die Aufgabe wird durch die in den Ansprüchen 1, 5, 8, 11, 13 oder 21 genannten Merkmale gelöst. In den Ansprüchen 2 bis 4, 6, 7, 9, 10, 12, 14 bis 20 und 22 bis 27 sind weitere Ausgestaltungen der Erfindung beschrieben.

Bei einem gütegeschalteten Pulslaser wird der Güteschalter normalerweise zwischen einem Ein-Zustand mit maximaler Lichtdurchlässigkeit und einem Aus-Zustand mit minimaler Lichtdurchlässigkeit hin- und hergeschaltet. Bei den Ausgestaltungen der Erfindung nach den Ansprüchen 1 bis 4 wird der Güteschalter in seinem Aus-Zustand von einer Erstpulssteuerung so angesteuert, daß seine Lichtdurchlässigkeit über dem möglichen Minimalwert liegt.

Ab einem bestimmten Wert der Lichtdurchlässigkeit des Güteschalters setzt Prelasing ein, d.h. der Pulslaser sendet Laserstrahlung mit einer im Vergleich zu den Laserpulsen sehr geringen Intensität aus. Dabei variiert die Intensität der Laserstrahlung und es kommt zu einzelnen Spikes (kurzzeitige Erhöhungen der Intensität), die die Aufladung des aktiven Lasermaterials plötzlich reduzieren. Mit steigender Intensität und/oder Dauer des Prelasings reduziert sich die Aufladung des aktiven Lasermaterials auf immer niedrigere Werte. Erfindungsgemäß wird bei einigen Ausführungsformen der Erfindung durch entsprechende Ansteuerung des Güteschalters das Prelasing auf eine Intensität eingestellt, die die Aufladung des aktiven Lasermaterials etwa auf den beim Pulsbetrieb vorliegenden Spitzenwert einstellt.

Vorteil der Erfindung ist, daß bei der Triggerung des ersten Pulses einer Pulsfolge etwa der gleiche Wert der Aufladung des aktiven Lasermaterials vorliegt, wie bei den nachfolgenden Pulsen. Somit ist auch die Energie des ersten Pulses nahezu gleich der der nachfolgenden Pulse. Unter nahezu gleich wird je nach Anforderung an die Genauigkeit der Pulsenergie ein Unterschied zwischen der Energie des ersten und der jeweiligen Energie der nachfolgenden Laserpulse von etwa +/- 0,5% bis etwa +/- 20% verstanden. Aus diesen Werten ergibt sich die Genauigkeit, mit der die Aufladung des aktiven Lasermaterials unmittelbar vor dem Triggern des ersten Laserpulses mit der während einer Pulsfolge als Spitzenwert vorliegenden Aufladung übereinstimmen muß.

Der technische Aufwand der Erfindung in ihrer einfachsten Ausführungsform ist sehr gering, da nur die Lichtdurchlässigkeit des Güteschalters in seinem Aus-Zustand auf einen bestimmten Wert eingestellt werden muß. Weiterhin ist vorteilhaft, daß keinerlei Beeinflussung der Pumpquelle nötig ist.

Die Erhöhung der Lichtdurchlässigkeit des Güteschalters in seinem Aus-Zustand kann im einfachsten Fall ständig beibehalten werden. Zwischen den ausgesandten Laserpulsen findet dann zeitweise Prelasing mit geringer Intensität statt, und die Zeitkonstante für die Aufladung des aktiven Lasermaterials ist etwas erhöht. Das kann verhindert werden, indem der Güteschalter nur beim inaktiven Betrieb des Pulslasers auf erhöhte Lichtdurchlässigkeit während seines Aus-Zustandes eingestellt wird. Beim Pulsbetrieb des Pulslasers wird der Güteschalter während seines Aus-Zustandes in diesem Fall auf minimale Lichtdurchlässigkeit eingestellt.

Werden die Pulswiederholfrequenz und/oder die Pulsenergie des Pulslasers variiert, so ändert sich der während einer ausgesandten Pulsfolge erreichte Spitzenwert der Aufladung des aktiven Lasermaterials. Damit die Energie des ersten Pulses der Pulsfolge wieder etwa gleich der Energie der nachfolgenden Pulse wird, muß die Prelasingintensität über eine Änderung der Lichtdurchlässigkeit des Güteschalters während seines Aus-Zustandes angepaßt werden. In einer weiteren Ausgestaltung der Erfindung wird diese Anpassung automatisch von der Erstpulssteuerung durchgeführt. Im einfachsten Fall kann dies durch eine mechanische Kopplung der Einstellregler für die betreffenden Parameter (Pulswiederholfrequenz und/oder Pulsenergie und Prelasingintensität bzw. Güteschalter-Ansteuerungsparameter) erzielt werden. Im allgemeinen wird aber eine elektronische Schaltung in analoger oder digitaler Bauweise (oder auch analog digital gemischt) notwendig sein. So kann z.B. eine Analogrechnerschaltung zu jedem Wert der Pulswiederholfrequenz und/oder der Pulsenergie die nötige Prelasingintensität bestimmen und den Güteschalter entsprechend ansteuern. Die zu bestimmten Werten von Pulswiederholfrequenz und/oder Pulsenergie gehörigen Werte der Prelasingintensität (bzw. Güteschalter-Ansteuerungsparameter) können auch in einem digitalen Speicher abgespeichert sein, und die richtige Ansteuerung des Güteschalters geschieht dann über die Auswahl der entsprechenden Speicherzelle. Dazu können z.B. die Werte von Pulswiederholfrequenz und/oder Pulsenergie digitalisiert und in eine Speicheradresse umgesetzt werden

Mit einem Pulslaser nach einem der Ansprüche 1 bis 4 und 13 bis 20 ist auch Single-Shot-Betrieb (Auslösen eines einzelnen Laserpulses) möglich, ohne daß die Energie eines einzelnen Pulses gegenüber der Energie der Pulse einer Pulsfolge überhöht wäre.

Ist Prelasing während des inaktiven Betriebs des Pulslasers nicht gewünscht, so kann die Erfindung in ihren Ausgestaltungen nach den Ansprüchen 5 bis 7 bzw. 13 bis 20 genutzt werden. Hier wird während des inaktiven Betriebes der Güteschalter auf minimale Lichtdurchlässigkeit eingestellt, so daß kein Prelasing stattfindet. Nach dem Umschalten des Pulslasers auf Pulsbetrieb wird die Triggerung der Laserpulse zunächst für eine vorgebbare Verzögerungszeit unterdrückt, und es wird die Lichtdurchlässigkeit des Güteschalters in seinem Aus-Zustand (in dem er zunächst verbleibt) kontinuierlich oder in mehreren Schritten erhöht, so daß durch Prelasing die Aufladung des aktiven Lasermaterials auf etwa den Wert abgebaut wird, der während des nachfolgenden Pulszuges als Spitzenwert vorliegen wird. Die Änderung der Lichtdurchlässigkeit kann nicht plötzlich in einem Schritt erfolgen, da hierdurch unkontrolliertes Pulsen des Pulslasers einsetzen würde. Nach Ablauf der vorgebbaren Verzögerungszeit wird die Lichtdurchlässigkeit des Güteschalters in seinem Aus-Zustand auf ihren Minimalwert eingestellt, und die Triggerung der Laserpulse wird freigegeben.

Der Vorteil dieser Ausführungsform der Erfindung gegenüber der vorher beschriebenen liegt darin, daß im inaktiven Betrieb des Pulslasers kein Prelasing stattfindet. Es muß allerdings eine Verzögerungszeit zwischen der Umschaltung auf Pulsbetrieb und der Triggerung des ersten Laserpulses in Kauf genommen werden. Je höher man die Geschwindigkeit wählt, mit der die Lichtdurchlässigkeit des Güteschalters in seinem Aus-Zustand erhöht wird, um so kürzer wird diese Verzögerungszeit, und um so höher wird andererseits die Prelasingintensität des Pulslaser während der Verzögerungszeit.

Ebenso wie bei der ersten schon beschriebenen Ausgestaltung der Erfindung kann auch bei dieser Ausführungsform die Verzögerungszeit automatisch an eingestellte Werte für die Pulswiederholfrequenz, Pulsenergie und Geschwindigkeit der Erhöhung der Lichtdurchlässigkeit des Güteschalters so angepaßt werden, daß innerhalb der Verzögerungszeit die Aufladung des aktiven Lasermaterials auf etwa den Wert abgebaut wird, der während des nachfolgenden Pulszuges als Spitzenwert vorliegen wird. Im allgemeinen wird hierzu eine elektronische Schaltung ähnlich der schon beschriebenen nötig sein.

Ist Prelasing zu keiner Zeit erwünscht, so kann die Erfindung in ihren Ausgestaltungen nach den Ansprüchen 8 bis 12 genutzt werden. Hier wird der Güteschalter stets so angesteuert, daß er in seinem Ein-Zustand eine möglichst hohe und in seinem Aus-Zustand eine möglichst niedrige Lichtdurchlässigkeit besitzt.

Nach dem Umschalten des Pulslasers auf Pulsbetrieb wird die Triggerung der Laserpulse zunächst für eine vorgebbare Verzögerungszeit unterdrückt. Während dieser Verzögerungszeit wird die Pumpquelle mit auf eine Begrenzungsleistung reduzierter Pumpleistung betrieben, die mindestens so niedrig ist, daß die Verluste (z.B. durch Fluoreszenz) des Pulslasers die Pumpleistung übersteigen und sich die Aufladung des aktiven Lasermaterials abbaut. Die Verzögerungszeit wird so lang gewählt, daß innerhalb der Verzögerungszeit die Aufladung des aktiven Lasermaterials auf etwa den Wert abgebaut wird, der während des nachfolgenden Pulszuges als Spitzenwert vorliegen wird. Nach Ablauf der Verzögerungszeit wird die Pumpleistung wieder auf ihren normalen Wert (im allgemeinen volle Leistung) erhöht, und die Triggerung der Laserpulse wird freigegeben. Der Vorteil dieser Ausführung der Erfindung gegenüber den vorher beschriebenen liegt darin, daß zu keiner Zeit Prelasing stattfindet.

Als Begrenzungsleistung wird im allgemeinen Null gewählt (d.h. die Pumpquelle wird abgeschaltet) damit der Abbau der Aufladung des aktiven Lasermaterials möglichst schnell erfolgt. Für die Funktion bestimmter Pumpquellen kann es aber sinnvoll sein, die Begrenzungsleistung größer als Null zu wählen, damit die Pumpquelle kontinuierlich in Betrieb bleibt.

Alternativ zu dem eben beschriebenen Ablauf kann die Verzögerungszeit auch so lang gewählt werden, daß sich innerhalb dieser Verzögerungszeit die Aufladung des aktiven Lasermaterials etwa auf Null abbaut (je nach Anforderung an die Übereinstimmung der Energie des ersten Laserpulses mit der jeweiligen Energie der nachfolgenden Pulse einer Pulsfolge bedeutet dies einen Abbau aufweniger als etwa 20% bis weniger als etwa 1% der vollen Aufladung). Das erste Triggersignal zur Triggerung eines Laserpulses wird mit dem zeitlichen Abstand zum Ende der Verzögerungszeit ausgelöst, den die Triggersignale der Pulsfolge untereinander haben. Dadurch liegt bei der Triggerung des ersten Laserpulses einer Pulsfolge etwa der gleiche Aufladungszustand des aktiven Lasermaterials vor, wie bei den nachfolgenden Laserpulsen, und folglich ist ihre Energie nahezu gleich.

Die Erfindung kann auch in einer Ausführungsform genutzt werden, die sich aus einer Kombination der Ausgestaltungen nach den Ansprüchen 5 bis 7 und den Ansprüchen 8 bis 12 ergibt. Dabei wird nach dem Umschalten des Pulslasers auf Pulsbetrieb für eine vorgebbare oder in ihrer Länge durch die Erstpulssteuerung an die gewählten Werte für Pulswiederholfrequenz und Pulsenergie angepaßte Verzögerungszeit die Lichtdurchlässigkeit des Güteschalters kontinuierlich oder in Schritten erhöht, so daß Prelasing stattfindet, und zusätzlich wird die Pumpleistung auf eine Begrenzungsleistung (im allgemeinen Null) reduziert. Dadurch baut sich die Aufladung des aktiven Lasermaterials wesentlich schneller ab, als sie es nur durch Prelasing oder nur durch Reduktion der Pumpleistung täte, und die Verzögerungszeit kann somit sehr kurz gewählt werden. Nach dem Ende der Verzögerungszeit wird die Pumpleistung wieder auf ihren normalen Wert (im allgemeinen volle Leistung) erhöht, und die Laserpulse werden getriggert.

Ebenso wie bei den vorher beschriebenen Ausgestaltungen der Erfindung können auch bei dieser Ausführungsform und ihren Alternativen die Verzögerungszeit und die Begrenzungsleistung automatisch an eingestellte Werte für die Pulswiederholfrequenz und Pulsenergie so angepaßt werden, daß innerhalb der Verzögerungszeit die Aufladung des aktiven Lasermaterials auf etwa den Wert abgebaut wird, der während des nachfolgenden Pulszuges als Spitzenwert vorliegen wird (bzw. wird bei der alternativen Ausführungsform die Aufladung etwa auf Null abgebaut). Im allgemeinen wird hierzu eine elektronische Schaltung ähnlich der schon beschriebenen nötig sein.

In weiteren Ausführungsformen der Erfindung nach den Ansprüchen 13 bis 20 ist die Erstpulssteuerung dazu ausgelegt, nach dem Umschalten des Pulslasers auf den Pulsbetrieb in einem ersten Zeitintervall die Aufladung des aktiven Lasermaterials auf einen Startwert abzubauen, der der Aufladung entspricht, die bei kontinuierlicher Lasertätigkeit vorliegen würde, in einem anschließenden zweiten Zeitintervall das aktive Lasermaterial etwa auf den während des Pulsbetriebs erreichten Spitzenwert aufzuladen und am Ende des zweiten Zeitintervalls den ersten Laserpuls auszulösen.

Erfindungsgemäß wird durch entsprechende Ansteuerung des Güteschalters in dem ersten Zeitintervall durch Prelasing die Aufladung des aktiven Lasermaterials auf einen Startwert reduziert, der der Aufladung entspricht, die das aktive Lasermaterial bei kontinuierlichem Dauerbetrieb (also kein Pulsbetrieb) erreichen würde. Wenn dieser Wert erreicht ist, stabilisiert sich die Intensität der Laserstrahlung und es kommt kaum noch zu Spikes. Wählt man die Länge des ersten Zeitintervalls länger, als zum Erreichen des Startwertes nötig ist (mindestens etwa 5%), so stabilisiert sich die Intensität der Laserstrahlung noch weiter und der Startwert ist besser definiert. Damit wird auch in dem anschließenden zweiten Zeitintervall die Aufladung des aktiven Lasermaterials auf den während des Pulsbetriebs erreichten Spitzenwert genauer erreicht und die Energie des ersten Pulses entspricht besser der Energie der übrigen Pulse einer Pulsfolge.

Alternativ hierzu kann der Abbau der Aufladung auch durch Reduktion der Pumpleistung während des gesamten ersten Zeitintervalls oder eines Teils davon erreicht werden Die Pumpleistung kann dabei um etwa 10% bis 100% reduziert werden. Auch eine Kombination aus Prelasing und Reduktion der Pumpleistung ist möglich.

Ausgehend von dem Startwert wird in einem anschließenden zweiten Zeitintervall das aktive Lasermaterial etwa auf den während des Pulsbetriebs erreichten Spitzenwert aufgeladen und am Ende des zweiten Zeitintervalls der erste Laserpuls ausgelöst.

Vorteil dieser Ausführungsformen der Erfindung ist, daß bei der Triggerung des ersten Pulses einer Pulsfolge etwa der gleiche Wert der Aufladung des aktiven Lasermaterials vorliegt, wie bei den nachfolgenden Pulsen. Da das Aufladen des Lasermaterial von dem definierten Startwert aus erfolgt, ist die Aufladung des Lasermaterial vor dem Aussenden des ersten Laserpulses auf einen sehr präzisen Wert möglich. Somit ist auch die Energie des ersten Pulses nahezu gleich der der nachfolgenden Pulse. Unter nahezu gleich wird je nach Anforderung an die Genauigkeit der Pulsenergie ein Unterschied zwischen der Energie des ersten und der jeweiligen Energie der nachfolgenden Laserpulse von etwa +/- 0,5% bis etwa +/- 20% verstanden. Aus diesen Werten ergibt sich die Genauigkeit, mit der die Aufladung des aktiven Lasermaterials unmittelbar vor dem Triggern des ersten Laserpulses mit der während einer Pulsfolge als Spitzenwert vorliegenden Aufladung übereinstimmen muß.

Der technische Aufwand der Erfindung in ihrer einfachsten Ausführungsform ist sehr gering, da nur zwei feste Zeitintervalle vorgesehen werden müssen: ein erstes, in dem die Aufladung des aktiven Lasermaterials abgebaut wird sowie ein zweites, in dem die Aufladung wieder aufgebaut wird und dessen Länge 80 Prozent des zeitlichen Abstand der Laserpulse beträgt. Weiterhin ist vorteilhaft, daß keinerlei Beeinflussung der Pumpquelle nötig ist, wenn der Abbau der Aufladung durch Prelasing erfolgt.

Werden die Pulswiederholfrequenz und/oder die Pulsenergie bzw. die Pumpleistung des Pulslasers variiert, so ändert sich der während einer ausgesandten Pulsfolge erreichte Spitzenwert der Aufladung des aktiven Lasermaterials. Damit die Energie des ersten Pulses der Pulsfolge wieder etwa gleich der Energie der nachfolgenden Pulse wird, muß die Länge des zweiten Zeitintervalls bei höheren Anforderungen an die Konstanz der Pulsenergie an die veränderten Parameter angepaßt werden. Im einfachsten Fall wird die Länge des Zeitintervalls von Hand eingestellt.

In einer weiteren Ausgestaltung der Erfindung wird diese Anpassung automatisch von der Erstpulssteuerung durchgeführt. Im einfachsten Fall kann dies durch eine mechanische Kopplung der Einstellregler für die betreffenden Parameter (Pulswiederholfrequenz und/oder Pulsenergie bzw. Pumpleistung und Länge des zweiten Zeitintervalls erzielt werden. Im allgemeinen wird aber eine elektronische Schaltung in analoger oder digitaler Bauweise (oder auch analog digital gemischt) notwendig sein. So kann z.B. eine Analogrechnerschaltung zu jedem Wert der Pulswiederholfrequenz und/oder der Pulsenergie bzw. der Pumpleistung die nötige Länge des zweiten Zeitintervalls bestimmen und den Güteschalter und die Triggerung der Laserpulse entsprechend ansteuern. Die zu bestimmten Werten von Pulswiederholfrequenz und/oder Pulsenergie bzw. Pumpleistung gehörigen Werte der Länge des zweiten Zeitintervalls können auch in einem digitalen Speicher abgespeichert sein, und die richtige Ansteuerung des Güteschalters geschieht dann über die Auswahl der entsprechenden Speicherzelle. Dazu können z.B. die Werte von Pulswiederholfrequenz und/oder Pulsenergie digitalisiert und in eine Speicheradresse umgesetzt werden

Wird die Summe der Längen des ersten und zweiten Zeitintervalls auf einen festen Wert eingestellt, so erzielt man den Vorteil, daß die Verzögerungszeit zwischen dem Umschalten des Lasers auf Pulsbetrieb mittels des Gatesignals und dem Aussenden des ersten Laserpulses genau bekannt und unabhängig von den eingestellten Parametern ist. Um die Summe der Längen des ersten und zweiten Zeitintervalls auf einen bestimmten Wert einzustellen, kann die Länge des ersten Zeitintervalls, die nur einen Minimalwert nicht unterschreiten darf ansonsten aber unkritisch ist, entsprechend angepaßt werden.

In den Ansprüchen 21 bis 23 sind Ausführungsformen der Erfindung beschrieben, bei denen die Energie der ersten Pulse einer Pulsfolge an die Energie der nachfolgenden Pulse angepaßt wird, indem die hohe im Moment des Umschaltens des Pulslasers auf Pulsbetrieb vorliegende Aufladung des aktiven Lasermaterials nur zum Teil in Form des ersten Laserpulses bzw. der ersten Laserpulse abgebaut wird. Dazu wird ab dem Moment des Umschaltens des Pulslasers auf Pulsbetrieb für eine vorgebbare Zeitspanne die Lichtdurchlässigkeit des Güteschalters in seinem Ein-Zustand nicht auf maximale Lichtdurchlässigkeit, sondern auf eine Begrenzungsdurchlässigkeit eingestellt, die gegenüber der maximalen Lichtdurchlässigkeit reduziert ist. Dadurch setzt die Lasertätigkeit mit gegenüber dem normalen Pulsbetrieb verminderter Leistung ein, und der erste ausgelöste Laserpuls erhält eine Energie, die unter der maximal möglichen Energie liegt. Die Begrenzungsdurchlässigkeit wird so gewählt, daß die Energie des ersten Laserpulses etwa der Energie der Laserpulse einer Pulsfolge in ihrem stabilen Zustand entspricht. Durch diesen ersten Laserpuls wird die Aufladung des aktiven Lasermaterials reduziert. Sie baut sich im allgemeinen danach auf einen Wert auf, der noch über dem im normalen Pulsbetrieb als Spitzenwert vorliegenden Wert liegt. Es müssen dann der zweite und eventuell noch ein dritter Laserpuls mit einer Ansteuerung des Güteschalters in seinem Ein-Zustand auf eine Begrenzungsdurchlässigkeit ausgesandt werden, wobei die Begrenzungsdurchlässigkeit dann höher liegt als beim ersten Laserpuls, da die Aufladung des aktiven Lasermaterials schon reduziert ist. Die vorgebbare Zeitspanne endet nach der Aussendung des zweiten bzw. dritten Laserpulses.

Der Vorteil dieser Ausführungsform der Erfindung liegt darin, daß kein Prelasing stattfindet und auch keine Verzögerung zwischen dem Umschalten des Pulslasers auf Pulsbetrieb und der Aussendung des ersten Laserpulses vorliegt.

Ebenso wie bei den anderen schon beschriebenen Ausführungsformen der Erfindung ist es auch hier möglich, mittels einer elektronischen Schaltung ähnlich der schon beschriebenen die vorgebbare Zeitspanne und die Begrenzungsdurchlässigkeit in Abhängigkeit von eingestellten Werten der Pulswiederholfrequenz und der Pulsenergie automatisch so zu wählen, daß der erste Laserpuls einer Pulsfolge etwa die gleiche Energie enthält, wie jeder weitere Puls dieser Pulsfolge.

Während des Pulsbetriebs gibt der Pulslaser mehr Energie ab als während des inaktiven Betriebs. Dadurch erhöht sich die Temperatur des aktiven Lasermaterials während des inaktiven Betriebs gegenüber der Zeit des Pulsbetriebs, was mit unerwünschten Eigenschaftsänderungen des Pulslasers verbunden sein kann. Um diesen Effekt zu vermeiden oder wenigstens zu reduzieren, kann als eine Variante der Erfindung bei allen Ausführungsformen während des inaktiven Betriebs des Pulslasers die Pumpleistung der Pumpquelle reduziert werden. Die Pumpleistung wird dabei auf einen Wert reduziert, bei dem die Energiebilanz des Pulslaser während des inaktiven Betriebs möglichst gleich der beim Pulsbetrieb ist. Die dafür nötige Pumpleistung hängt von den Eigenschaften des Pulslasers und von den gewählten Werten der Pulswiederholfrequenz und der Pulsenergie ab. Typische Werte liegen bei 95 % bis 50 % der vollen Pumpleistung.

Die Erfindung ist prinzipiell auf alle Arten von gütegeschalteten Pulslasern (z.B. Gaslaser, Festkörperlaser, Farbstofflaser, Excimerlaser) mit allen möglichen Pumpquellen (z.B. Blitzlampen, kontinuierliche Lampen, Leuchtdioden, Laser, Laserdioden, Gasentladungen) anwendbar. Nur bei den Ausführungsformen der Erfindung nach den Ansprüchen 8 bis 12 muß die Pumpquelle in ihrer Leistung beeinflußbar sein, wobei es im allgemeinen genügt, wenn sie kurzzeitig abschaltbar ist.

Bei der Ausführungsform der Erfindung nach den Ansprüchen 8 bis 12 braucht also der Laser nicht unbedingt mit einem Güteschalter ausgestattet zu sein.

Das Grundprinzip der Erfindung, wie es zusammenfassend im Anspruch 28 angegeben ist, besteht darin, die Energie für den ersten Impuls in einer Impulsfolge über die Menge der Aufladung in dem Lasermaterial so zu steuern, daß nur eine Teilmenge der maximalen Aufladung des Lasermaterials abgebaut wird. Dies kann einerseits in der Weise realisiert werden, daß, wenn vor der Auslösung des Erstimpulses das Lasermaterial bis zu der maximalen Aufladung aufgeladen ist, diese maximale Aufladung etwas abgebaut wird, bevor das Triggern des Erstimpulses stattfindet. Andererseits kann aber die Auslösung des Erstimpulses auch so gesteuert werden, daß ausgehend von maximaler Aufladung nur eine Teilmenge der Aufladung abgebaut wird, so daß bei Beendigung des Erstimpulses noch eine Restmenge der Aufladung in dem Lasermaterial verbleibt.

Der Güteschalter kann als akustooptischer Schalter ausgebildet sein. Ein solcher Schalter besteht aus einem für die Laserstrahlung transparenten optischen Material, in welchem eine Ultraschallwelle mit Hilfe eines durch die Hochfrequenzspannung zum Schwingen angeregten piezoelektrischen Kristalls erzeugt wird. Aufgrund des photoelastischen Effektes werden im Material durch die Ultraschallwelle lokale Änderungen des Brechungsindexes induziert. Die Periode des dadurch entstehenden Phasengitters ist identisch mit der akustischen Wellenlänge, und die Amplitude ist proportional zur Schallamplitude. Wird ein derartiges akustooptisches Element in einen Laserresonator eingesetzt, so verläßt ein Teil der elektromagnetischen Welle den Resonator durch Beugung am Phasengitter. Falls die Schallamplitude bzw. die Hochfrequenzspannung genügend groß ist, reichen diese Zusatzverluste aus, um die Laseroszillation zu verhindern (der Güteschalter ist in seinem Aus-Zustand). Durch Abschalten der Hochfrequenzspannung wird der Laserresonator sofort wieder in den Zustand hoher Güte versetzt und ein Laserpuls wird emittiert (der Güteschalter ist in seinem Ein-Zustand).

Wird die Hochfrequenzspannung von ihrem vollen Wert ausgehend reduziert, so sinkt die Schallamplitude und damit die Effektivität der Ablenkung des Lichtes im Resonator, d.h. ein geringerer Teil des Lichts verläßt den Laserresonator. Unterhalb einer bestimmten Hochfrequenzspannung setzt dann Prelasing ein. Außer über die Hochfrequenzspannung läßt sich die Effektivität der Lichtablenkung auch über die Frequenz der an das Piezoelement angelegten Hochfrequenzspannung beeinflussen, da das Piezoelement bei einer Anregungsfrequenz die nicht seiner Resonanzfrequenz entspricht, mit vermindertem Wirkungsgrad arbeitet.

Der Güteschalter kann auch als elektrooptischer Schalter basierend auf dem Pockels- oder dem Kerreffekt aufgebaut sein. Beim Pockelseffekt wird das Licht durch einen Kristall (z.B. KDP) geleitet, der beim Anlegen eines elektrischen Feldes doppelbrechend wird. Beim Kerreffekt wird statt des Kristalls eine Küvette mit einer Flüssigkeit(z.B. Nitrobenzol), deren Moleküle anisotrop sind, verwendet. In beiden Fällen ergib sich in Kombination mit einem Polarisator ein optischer Schalter, dessen Durchlässigkeit über die Höhe der angelegten Spannung steuerbar ist.

Die Erfindung wird anhand von Ausführungsbeispielen und der Zeichnung erläutert.

Es zeigen
Fig. 1 und Fig. 7 das Prinzipbild eines gütegeschalteten Pulslasers,
Fig. 2 und Fig. 8 das Blockschaltbild einer Erstpulssteuerung,
Fig. 3 bis Fig. 6 und Fig. 10 bis Fig. 11 den zeitlichen Verlaufverschiedener Parameter und Signale des Pulslasers.

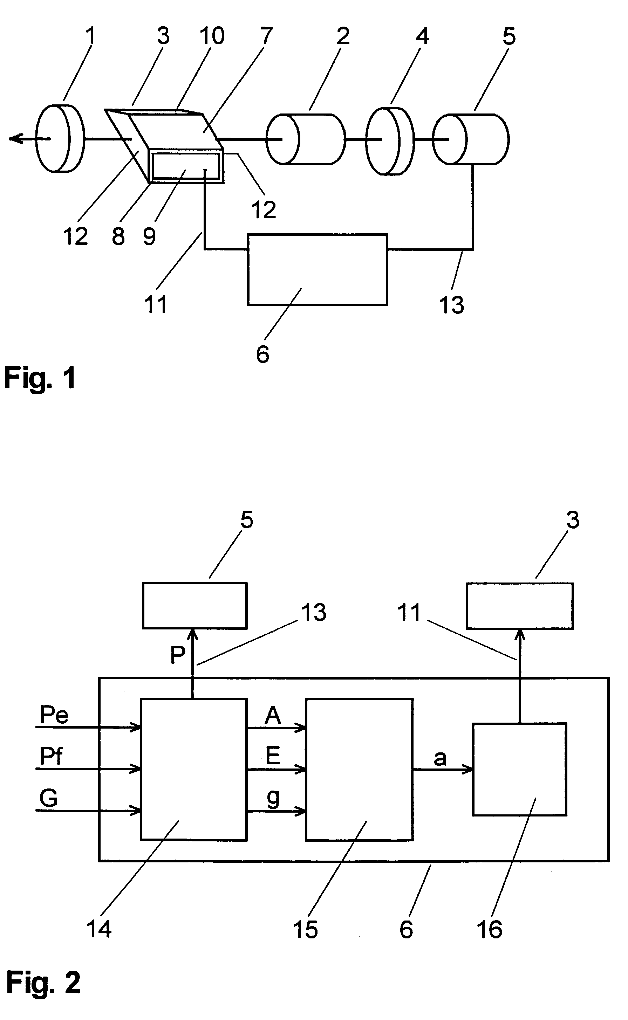

Der in Fig. 1 dargestellte Pulslaser besteht aus einem Auskoppelspiegel 1, einem aktiven Lasermaterial 2 z.B. in Form eines Nd:YAG-Kristalls, einem Güteschalter 3, einem Einkoppelspiegel 4, einer Laserdiode 5 als Pumpquelle und einer Erstpulssteuerung 6. Die Bauteile 1 bis 4 bilden den Laserresonator, der von der Laserdiode 5 durch den Einkoppelspiegel 4 hindurch longitudinal gepumpt wird. Der als akustooptischer Schalter ausgebildete Güteschalter 3 besteht aus einem Glasblock 7, der an der einen Stirnseite 8 ein Piezoelement 9 trägt und dessen gegenüberliegende Stirnseite 10 angeschrägt ist. Wird über die Leitung 11 eine Hochfrequenzspannung an das Piezoelement angelegt, so erzeugt sie hochfrequente Schallwellen in dem Glasblock 7, die sich an der angeschrägten Stirnseite 10 totlaufen. Die Schallwellen wirken als Phasengitter und lenken Licht, welches durch die Seitenflächen 12 geleitet wird, ab. Der Güteschalter 3 hat einen Ein-Zustand, in dem er nicht mit Hochfrequenzspannung versorgt wird und das Licht nicht ablenkt, und einen Aus-Zustand, in dem er mit Hochfrequenzspannung mit voller Amplitude versorgt wird und das Licht maximal ablenkt. Die optischen Komponenten des Pulslasers sind so justiert, daß beim Ein-Zustand des Güteschalters Lasertätigkeit möglich ist. Beim Aus-Zustand des Güteschalters wird das Licht im Resonator so weit abgelenkt, daß keine Lasertätigkeit möglich ist.

Die Funktion des Pulslasers ist folgende: Zunächst ist der Güteschalter 3 im Aus-Zustand. Das aktive Lasermaterial 2 lädt sich durch die Leistung der Pumpquelle 5 voll auf Wird nun der Güteschalter 3 kurzzeitig in den Ein-Zustand geschaltet, so setzt Lasertätigkeit ein und ein Laserpuls wird emittiert. Die Aufladung des aktiven Lasermaterials 2 reduziert sich dabei auf Null oder zumindest nahezu auf Null. Danach lädt sich das aktive Lasermaterial 2 mit einer gewissen Zeitkonstanten wieder auf, und ein weiterer Laserpuls kann emittiert werden.

Fig. 2 zeigt das Prinzipbild einer Erstpulssteuerung 6. Sie ist über eine Leitung 11 mit dem Güteschalter 3 und eine Leitung 13 mit der Pumpquelle 5 verbunden. Die Erstpulssteuerung 6 ist aus einer Rechenschaltung 14, einem Gate 15 und einem HF-Generator 16, der über die Leitung 11 den Güteschalter 3 versorgt, aufgebaut. Die Eingangssignale der Rechenschaltung 14 sind ein Signal Pe für die gewählte Pulsenergie, ein Signal Pf für die gewählte Pulswiederholfrequenz und ein digitales Gatesignal G, welches zwischen inaktivem Betrieb und Pulsbetrieb umschaltet.

Aus der Rechenschaltung 14 heraus geht ein Signal P an die Pumpquelle 5 und beeinflußt ihre Leistung. Darüber ist unter anderem eine Beeinflussung der Energie der ausgesandten Laserpulse möglich. Die Rechenschaltung 14 liefert an ihren weiteren Ausgängen ein Signal A, das die HF-Amplitude des HF-Generators 16 im Aus-Zustand des Güteschalters 3 bestimmt, ein Signal E, das die HF-Amplitude des HF-Generators 16 im Ein-Zustand des Güteschalters 3 bestimmt und ein digitales Signal g. Diese drei Signale gehen zu dem Gate 15, welches an seinem Ausgang ein Signal a liefert, das die Amplitude der von dem HF-Generator 16 erzeugten HF-Spannung festlegt und damit das Ablenkverhalten des Güteschalters 3 steuert. Das Signal g schaltet das Signal a zwischen den Werten A und E hin und her.

In der Rechenschaltung 14 ist eine mathematische Verknüpfung der Eingangssignale Pe, Pf und G mit den Ausgangssignalen P, A, E und g mit zum Beispiel analogen Rechenschaltungen realisiert. Die Form der mathematischen Verknüpfung hängt von den Eigenschaften des Pulslasers und von der gewählten Ausführungsform der Erfindung ab.

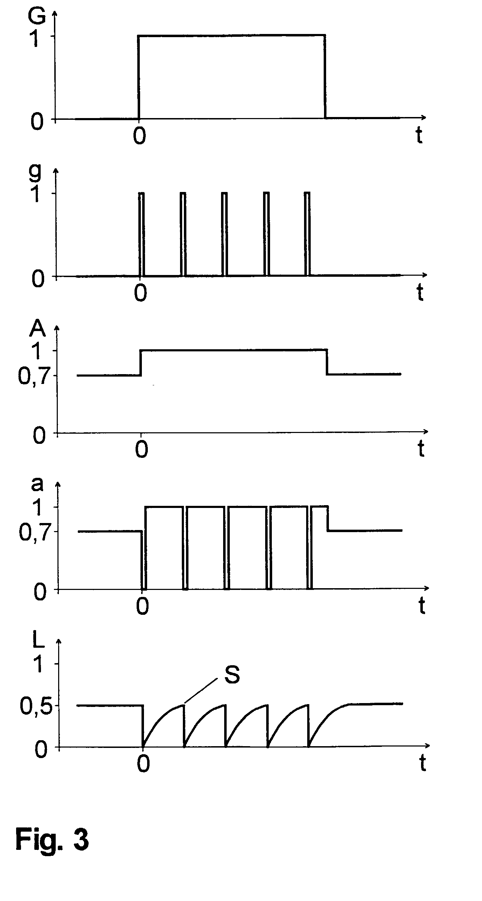

Fig. 3 zeigt den zeitlichen Verlauf der Signale G, g, A, a und der Aufladung L des aktiven Lasermaterials 2 für die Ausführungsformen der Erfindung nach den Ansprüchen 1 bis 4. Das nicht dargestellte Signal E ist ständig auf Null. Auf der waagerechten Achse ist jeweils die Zeit t und auf der senkrechten Achse das entsprechende auf 1 normierte Signal aufgetragen. Das Signal G kann von außen her zwischen den Zuständen 0 und 1 hin- und hergeschaltet werden. Dabei bedeutet 0 inaktiver Betrieb des Pulslasers und 1 Pulsbetrieb. Der Zeitpunkt t=0 ist auf den Moment des Umschaltens von inaktivem Betrieb auf Pulsbetrieb gelegt worden. Mit den steigenden Flanken des Signals g werden die einzelnen Laserpulse beim Pulsbetrieb getriggert. Der zeitliche Abstand der Pulse wird über das Eingangssignal Pf festgelegt. Die Signale G und g sind so miteinander verknüpft, daß g immer 0 ist, wenn G gleich 0 ist und g Pulse liefert, wenn G=1 ist. Während G=0 ist, legt die Rechenschaltung 14 für das Signal A z.B. einen Wert von A=0,7 fest, und während G=1 ist, liegt der Wert bei A=1. Der Wert für E ist immer E=0. Das Gate 15 verknüpft die Signale A, E und g so miteinander, daß während g=0 ist, das Signal a=A ist und während g=1 ist, das Signal a=E ist.

Der zeitliche Verlauf von a ist dann folgender: Während G=0 ist, ist a=0,7 und während G=1 ist, wechselt a mit der durch Pf bestimmten Pulswiederholfrequenz zwischen 0 und 1. Ist das Signal a=1, wird der Güteschalter 3 mit maximaler HF-Amplitude angesteuert und Lasertätigkeit ist aufgrund der maximalen Lichtablenkung im Laserresonator nicht möglich. Wird a auf 0 umgeschaltet, so wird die Lichtablenkung Null und ein Laserpuls wird ausgesandt. Ist a=0,7, so findet aufgrund der teilweisen Lichtablenkung Prelasing mit einer bestimmten Leistung statt. Diese Leistung wurde über die Rechenschaltung 14 so gewählt, daß die Aufladung L des aktiven Lasermaterials 2 während des inaktiven Betriebes des Pulslasers innerhalb festlegbarer Toleranzen dem Wert entspricht, der während des Pulsbetriebes als Spitzenwert S vorliegt.

Der zeitliche Verlauf der Aufladung L ist folgender: Während des inaktiven Betriebes des Pulslasers wird die Aufladung durch Prelasing konstant auf einen Wert von z.B. 0,5 gehalten (wobei 1 der vollen Aufladung entspricht). Mit der ersten fallenden Flanke des Signals a wird der erste Laserpuls einer Pulsfolge ausgesandt. Die Aufladung sinkt dadurch sehr schnell auf 0 ab. Durch die Zufuhr von Pumpenergie baut sich die Aufladung mit einer bestimmten Zeitkonstanten wieder auf Die nächste fallende Flanke des Signals a löst den nächsten Laserpuls aus. In diesem Moment war die Aufladung bis auf den Spitzenwert S, der während des Pulsbetriebes erreicht wird, angestiegen. Der ausgesandte Laserpuls baut die Aufladung wieder auf 0 ab, und der beschriebene Vorgang wiederholt sich, bis der Pulslaser wieder auf inaktiven Betrieb umgeschaltet wird. Die Aufladung steigt dann auf den durch das Prelasing bestimmten Wert von 0,5 und bleibt auf diesem Wert. Da die Aufladung während des inaktiven Betriebes des Pulslasers etwa den Wert S hatte, erhält der erste Puls etwa die gleiche Energie wie jeder der folgenden Laserpulse.

Werden andere Werte für die Pulsenergie Pe und die Pulswiederholfrequenz Pf gewählt, so ändert sich der Spitzenwert S. Die Rechenschaltung 14 paßt dann den während G=0 vorliegenden Wert für A so an, daß während des inaktiven Betriebes des Pulslasers wieder die Aufladung innerhalb festlegbarer Toleranzen mit dem neuen Wert S übereinstimmt und somit alle Pulse einer Pulsfolge etwa gleiche Energie enthalten.

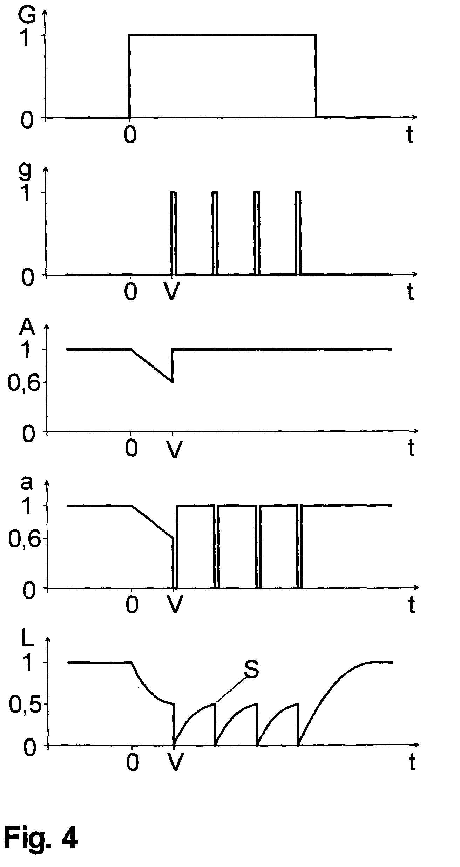

Fig. 4 zeigt den Signalverlauf eines Pulslasers in einer Aufführungsform nach den Ansprüchen 5 bis 7. Das nicht dargestellte Signal E ist ständig auf 0. Nach dem Umschalten von inaktivem Betrieb (G=0) auf Pulsbetrieb (G=1) verzögert die Rechenschaltung 14 den ersten Puls des Signals g um eine Verzögerungszeit V. Während dieser Verzögerungszeit V wird das Signal A kontinuierlich von 1 bis auf z.B. 0,6 reduziert und nach dem Ablauf von V wieder auf 1 erhöht. Das Signal a ist 1 während des inaktiven Betriebes, verringert sich von 1 auf 0,6 während der Verzögerungszeit V und schaltet während der übrigen Zeit des Pulsbetriebes zwischen 0 und 1 hin und her. Die Aufladung L ist während des inaktiven Betriebs 1, d.h. das aktive Lasermaterial 2 ist voll aufgeladen. Während der Verzögerungszeit V reduziert sich L und erreicht am Ende von V etwa den hier als Beispiel gewählten Wert 0,5. Während des Aussendens der Laserpulse schwankt L zwischen 0 und dem Spitzenwert S=0,5. Nach dem Umschalten auf inaktiven Betrieb baut sich L wieder auf 1 auf.

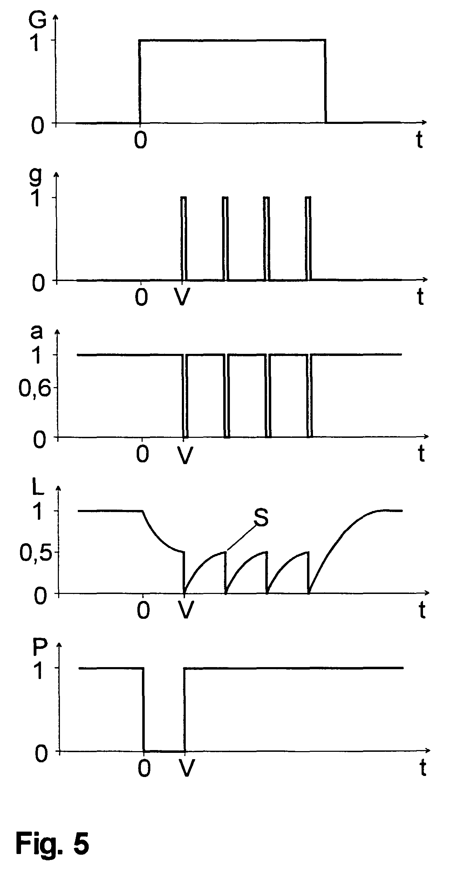

Fig. 5 zeigt den Signalverlauf eines Pulslasers in einer Ausführungsform nach den Ansprüchen 8 bis 10. Das Signal A ist ständig auf 1, und das Signal E ist ständig auf 0, beide sind nicht dargestellt. Die Pumpleistung P der Pumpquelle 5 ist während des inaktiven Betriebs des Pulslasers auf ihr Maximum eingestellt. Im Moment des Umschaltens des Pulslasers auf Pulsbetrieb bei t=0 wird für eine Verzögerungszeit V die Pumpleistung auf 0 reduziert. Bedingt durch die Verluste des Laserresonators nimmt die Aufladung während der Verzögerungszeit V von ihrem Maximalwert ausgehend ab und erreicht bei t=V etwa den Wert 0,5 (als Beispiel) der auch dem Spitzenwert S beim Pulsbetrieb entspricht. Ab t=V werden die Laserpulse getriggert (Signal g) und die Pumpleistung wird wieder auf ihren Ausgangswert erhöht. Nach dem Umschalten auf inaktiven Betrieb baut sich L wieder auf 1 auf.

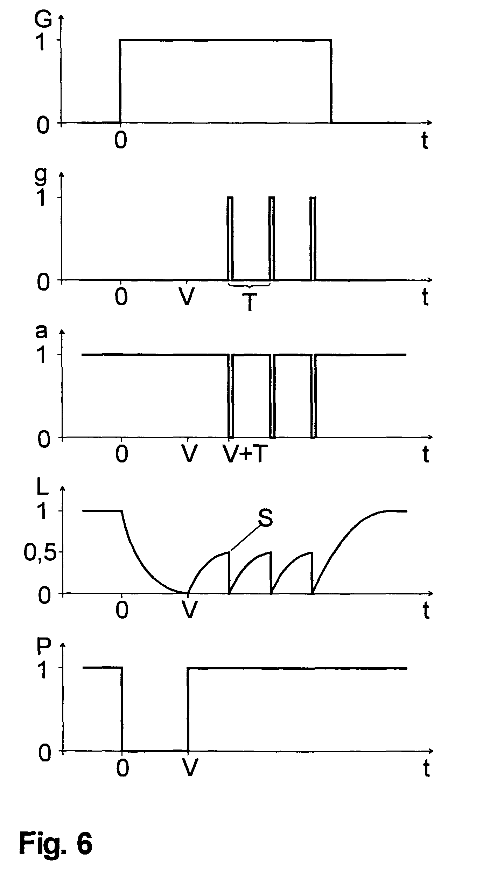

Fig. 6 zeigt den Signalverlauf bei einem Pulslaser in einer Ausführungsform nach den Ansprüchen 11 oder 12. Das Signal A ist ständig auf 1 und das Signal E ständig auf 0, beide sind nicht dargestellt. Die Pumpleistung P der Pumpquelle 5 ist während des inaktiven Betriebes auf ihr Maximum eingestellt. Im Moment des Umschaltens des Pulslasers auf Pulsbetrieb bei t=0 wird für eine Verzögerungszeit V die Pumpleistung auf 0 reduziert. Die Verzögerungszeit V ist so lang gewählt, daß die Aufladung des aktiven Lasermaterials 2 vor t=V auf 0 abgefallen ist. Der erste Laserpuls einer Pulsfolge wird zum Zeitpunkt V+T ausgelöst, wobei T der zeitliche Abstand der Laserpulse während einer Pulsfolge ist. Dadurch, daß sich die Aufladung L von Null ausgehend während der Zeit T aufbaut, liegt beim Aussenden des erste Laserpulses die gleiche Aufladung vor, wie bei Aussenden der übrigen Laserpulse, und somit enthalten sie auch alle die gleiche Energie.

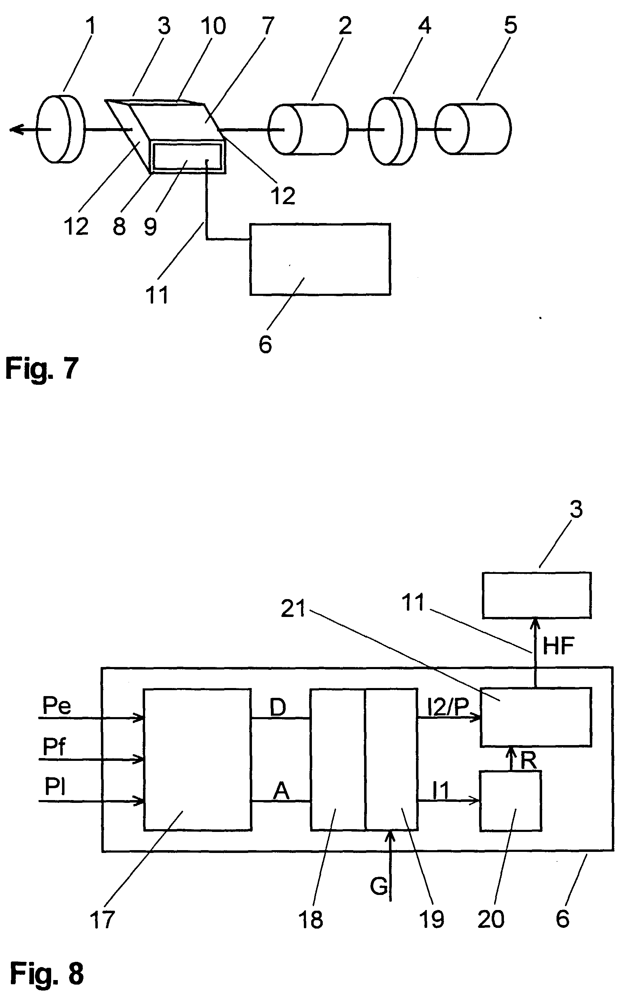

Der in Fig. 7 dargestellte Pulslaser unterscheidet sich von dem in Fig. 1 dargestellten nur durch das Fehlen der Leitung 13, die in Fig. 1 die Erstpulssteuerung 6 mit der Pumpquelle 5 verbindet. Eine eventuelle Beeinflussung der Pumpquelle 5 geschieht in diesem Beispiel über eine separate, hier nicht dargestellte Signalleitung.

Fig. 8 zeigt das Prinzipbild einer nach den Ansprüchen 13 bis 20 ausgeführten Erstpulssteuerung 6. Sie ist über eine Leitung 11 mit dem Güteschalter 3 verbunden. Die Erstpulssteuerung 6 ist aus einer Rechenschaltung 17, einem RAM-Speicher 18, einem Timer 19, einem Integrator 20 und einem HF-Generator 21, der über die Leitung 11 den Güteschalter 3 versorgt, aufgebaut.

Die Eingangssignale der Rechenschaltung 17 sind ein Signal Pe für die gewählte Pulsenergie, ein Signal Pf für die gewählte Pulswiederholfrequenz und ein Signal Pl für die gewählte Pumpleistung. Die Rechenschaltung 17 und der RAM-Speicher 18 sind über eine Datenleitung D und eine Adressenleitung A miteinander verbunden. In dem RAM-Speicher 18 sind die für den Timer 19 nötigen Daten für die Länge des ersten und zweiten Zeitintervalls und die Pulswiederholfrequenz gespeichert, und sie werden bei einer Veränderung der Eingangssignale Pe, Pf oder Pl von der Rechenschaltung 17 aktualisiert.

Der Timer 19 hat als Eingangssignal das Gatesignal G, das von 0 auf 1 wechselt, wenn der Pulslaser von inaktivem Betrieb auf Pulsbetrieb umgeschaltet wird. Während des ersten Zeitintervalls liefert der Timer 19 ein Signal I1 an den Integrator 20, der seinerseits während des ersten Zeitintervalls ein rampenartiges Signal R an den HF-Generator 21 liefert. Das rampenartige Signal R bewirkt, daß sich die Lichtdurchlässigkeit des Güteschalters 3 während des ersten Zeitintervalls kontinuierlich erhöht. Dadurch wird durch Prelasing die Aufladung des aktiven Lasermaterials 2 abgebaut. Das Signal am Ausgang I2/P ist während des zweiten Zeitintervalls 0, danach werden kurze Pulse mit einem zeitlichen Abstand T, der der gewählten Pulswiederholfrequenz entspricht, erzeugt. Sie dienen der Triggerung der Laserpulse.

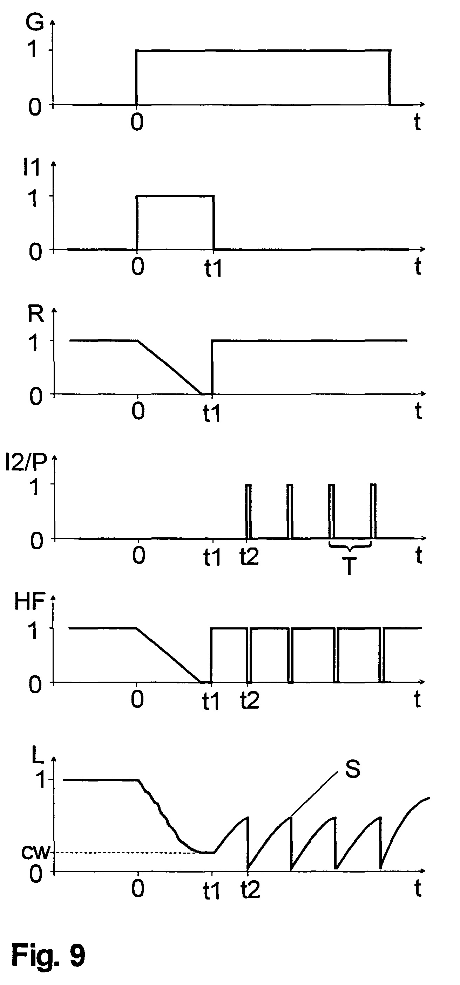

Fig. 9 zeigt den zeitlichen Verlauf der Signale G, I1, R, I2/P, HF und L. Das Gatesignal G wechselt beim Zeitpunkt t=0 von null auf 1 und wechselt später wieder auf 0. Während das Signal G auf 1 geschaltet ist, ist der Laser auf Pulsbetrieb gestellt. Das Signal I1 schaltet von t = 0 bis t1 auf 1. Die Zeit von 0 bis t1 ist das erste Zeitintervall. Der Integrator 20 erzeugt aus dem Signal I1 ein Signal R daß ab dem Zeitpunkt t = 0 rampenartig von 1 auf 0 abfällt. Es erreicht kurz vor t1 den Wert 0 und springt bei t1 wieder auf 1. Das Signal I2/P ist bis zum Zeitpunkt t2 auf 0. Die Zeit zwischen t1 und t2 ist das zweite Zeitintervall. Ab dem Zeitpunkt t2 weist das Signal I2/P kurze Pulse auf, mit einem zeitlichen Abstand T, der dem Kehrwert der Pulswiederholfrequenz entspricht. Das Signal HF, mit dem der Güteschalter angesteuert wird, hat einen Verlauf, der sich aus der Kombination der Signale R und I2/P ergibt. Bei t = 0 fällt das Signal HF rampenartig von 1 auf 0 ab, bei t1 springt es auf 1 und ab t2 wechselt es pulsartig zwischen 1 und 0. Mit dem pulsartigen Verlauf werden die Laserpulse getriggert. In dem unteren Diagramm ist die Aufladung L des aktiven Lasermaterials 2 dargestellt. Bei t = 0 fällt die Aufladung L von ihrem Maximalwert, der gleich 1 gesetzt wurde, durch Prelasing unregelmäßig bis auf den Wert cw, der der Aufladung entspricht, die der Laser bei Dauerstrichbetrieb hätte. Zum Zeitpunkt t1 hat sich die Aufladung aufden Wert cw stabilisiert. Von t1 bis t2 läuft das zweite Zeitintervall, in dem die Aufladung des aktiven Lasermaterials wieder aufgebaut wird. Die Länge des zweiten Zeitintervalls ist so gewählt, daß die Aufladung bei t2 sehr genau den Wert S, der beim Pulsbetrieb des Lasers als Spitzenwert der Aufladung vorliegt, erreicht. Während des Pulsbetriebs fällt die Aufladung bei jedem ausgesandten Laserpuls sehr schnell auf nahezu 0 ab und baut sich dann wieder auf den Spitzenwert S auf. Nach dem Ende des Pulsbetriebs baut sich die Aufladung wieder auf ihren Maximalwert auf.

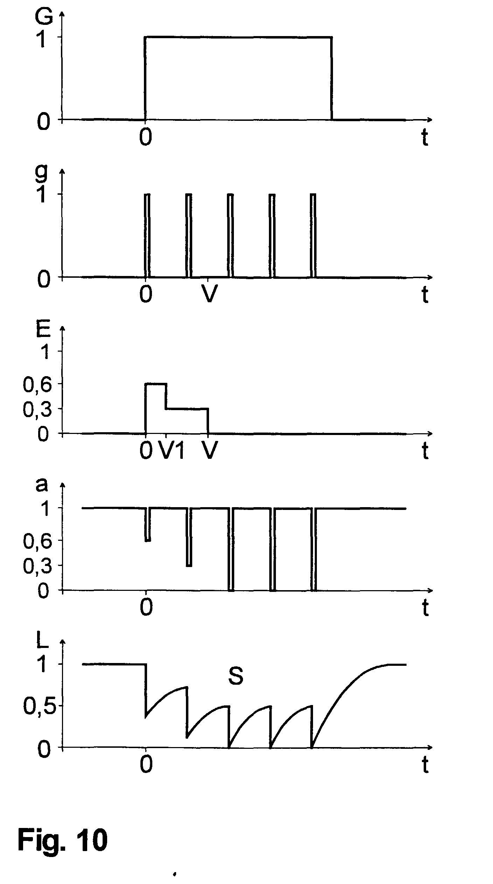

Fig. 10 zeigt den Signalverlauf bei einem Pulslaser in einer Ausführungsform nach den Ansprüchen 21 bis 23. Er wird vorzugsweise nach den Prinzipskizzen von Fig. 1 und Fig. 2 aufgebaut. Die nicht dargestellten Signale A und P sind ständig auf 1. Im Moment des Umschaltens des Pulslasers von inaktivem Betrieb auf Pulsbetrieb bei t=0 wird das Signal E von 0 auf einen ersten Begrenzungswert (z.B. E=0,6) angehoben (das Signal E könnte diesen Wert auch ständig während des inaktiven Betriebes des Pulslasers haben). Bei dem Zeitpunkt t=V1, der vor dem Triggerzeitpunkt des zweiten Laserpulses liegt, wird E auf einen zweiten Begrenzungswert (z.B. E=0,3) reduziert. Ab dem Zeitpunkt t=V, der vor dem Triggerzeitpunkt des dritten Laserpulses liegt, wird E auf 0 gesetzt. Das Ansteuersignal a des Güteschalters geht von 1 auf 0,6 während des erste Triggerpulses (Signal g), auf 0,3 während des zweiten Triggerpulses und auf 0 während der übrigen Triggerpulse. Da der Güteschalter 3 während der ersten beiden Triggerpulse nur teilweise durchlässig ist, baut sich die Aufladung L auch nur zum Teil ab. Die Begrenzungswerte (E=0,6 bzw. E=0,3) sind von der Erstpulssteuerung so eingestellt worden, daß die Energie aller Laserpulse etwa gleich wird.

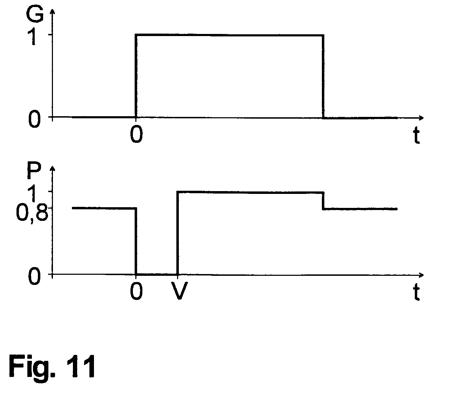

Fig. 11 zeigt den Signalverlauf bei einem Pulslaser in einer Ausführungsform, in der die Merkmale nach Anspruch 24 beispielhaft mit den Merkmalen nach einem der Ansprüche 8 bis 10 (der Signalverlauf hierzu ist in Fig. 5 dargestellt) kombiniert sind. Während des inaktiven Betriebs des Pulslasers ist die Pumpleistung P auf 0,8 reduziert. Von t=0 bis t=V wird P auf 0 reduziert und während der übrigen Zeit des Pulsbetriebes wird P auf 1 gesetzt, d.h. es wird die volle Pumpleistung ausgenutzt. Durch die Reduktion der Pumpleistung während des inaktiven Betriebes wird eine gleichmäßige Energieabsorption und damit auch eine gleichmäßige Betriebstemperatur des Pulslasers erreicht.

## Patentansprüche

1. Pulslaser mit einer Pumpquelle (5), einem aktiven Lasermaterial (2), einem Güteschalter (3) mit einem Ein-Zustand, in dem er weitgehend lichtdurchlässig und einem Aus-Zustand, in dem er weitgehend lichtundurchlässig eingestellt wird, einem Gatesignal (G) zum Umschalten des Pulslasers zwischen inaktivem Betrieb und Pulsbetrieb und einer Erstpulssteuerung (6) zur Steuerung der Erstpulsenergie, **dadurch gekennzeichnet**, daß die Erstpulssteuerung (6) dazu ausgelegt ist, die Lichtdurchlässigkeit des Güteschalters (3) in seinem Aus-Zustand wenigstens zeitweise auf einen Begrenzungswert zu erhöhen, bei dem Prelasing mit einer Intensität stattfindet, die die Aufladung des aktiven Lasermaterials (2) wenigstens unmittelbar vor dem Umschalten des Pulslasers von inaktivem Betrieb auf Pulsbetrieb etwa auf das Niveau des während des Pulsbetriebs bestehenden Spitzenwerts (S) begrenzt.

2. Pulslaser nach Anspruch 1, **dadurch gekennzeichnet**, daß die Lichtdurchlässigkeit des Güteschalters (3) in seinem Aus-Zustand dauernd auf den Begrenzungswert erhöht ist.

3. Pulslaser nach Anspruch 1, **dadurch gekennzeichnet**, daß die Lichtdurchlässigkeit des Güteschalters (3) nur während des inaktiven Betriebs des Pulslasers auf den Begrenzungswert erhöht ist.

4. Pulslaser nach einem der Ansprüche 1 bis 3, **dadurch gekennzeichnet**, daß die Pulswiederholfrequenz und/oder die Pulsenergie einstellbar sind und die Erstpulssteuerung (6) dazu ausgelegt ist, den Begrenzungswert in Abhängigkeit von der gewählten Pulswiederholfrequenz und der Pulsenergie so einzustellen, daß Prelasing mit einer Intensität stattfindet, die die Aufladung des aktiven Lasermaterials (2) etwa auf das Niveau des während des Pulsbetriebs mit der gewählten Pulswiederholfrequenz und Pulsintensität bestehenden Spitzenwerts (S) begrenzt.

5. Pulslaser mit einer Pumpquelle (5), einem aktiven Lasermaterial (2), einem Güteschalter (3) mit einem Ein-Zustand, in dem er weitgehend lichtdurchlässig und einem Aus-Zustand, indem er weitgehend lichtundurchlässig eingestellt wird, einem Gatesignal (G) zum Umschalten des Pulslasers zwischen inaktivem Betrieb und Pulsbetrieb und einer Erstpulssteuerung (6) zur Steuerung der Erstpulsenergie, **dadurch gekennzeichnet**, daß die Erstpulssteuerung (6) dazu ausgelegt ist
a. während des inaktiven Betriebs des Pulslasers den Güteschalter (3) weitgehend lichtundurchlässig einzustellen,
b. im Moment des Umschaltens des Pulslasers von inaktivem Betrieb auf Pulsbetrieb die Lichtdurchlässigkeit des Güteschalters (3) kontinuierlich oder in Schritten zu erhöhen,
c. die Triggerung des ersten Laserpulses nach dem Umschalten des Pulslasers von inaktivem Betrieb auf Pulsbetrieb für eine vorgebbare Verzögerungszeit (V) zu verzögern, wobei die Verzögerungszeit (V) so lang gewählt wird, daß die Aufladung des aktiven Lasermaterials(2) innerhalb dieser Verzögerungszeit (V) etwa auf das Niveau des während des Pulsbetriebs bestehenden Spitzenwerts (S) abgesunken ist und
d. ab dem Ende der Verzögerungszeit (V) bis zum Umschalten auf inaktiven Betrieb des Pulslasers den Güteschalter (3) in seinem Aus-Zustand weitgehend lichtundurchlässig einzustellen.

6. Pulslaser nach Anspruch 5, **dadurch gekennzeichnet**, daß die Erstpulssteuerung (6) dazu ausgelegt ist, die Geschwindigkeit der Erhöhung der Lichtdurchlässigkeit des Güteschalters (3) einstellbar zu machen.

7. Pulslaser nach Anspruch 5 oder 6, **dadurch gekennzeichnet**, daß die Pulswiederholfrequenz und/oder die Pulsenergie einstellbar sind und die Erstpulssteuerung (6) dazu ausgelegt ist, die Verzögerungszeit (V) in Abhängigkeit von der gewählten Pulswiederholfrequenz, der Pulsenergie und der Geschwindigkeit der Erhöhung der Lichtdurchlässigkeit des Güteschalters (3) so lang einzustellen, daß die Aufladung des aktiven Lasermaterials (2) innerhalb dieser Verzögerungszeit (V) etwa auf das Niveau des während des Pulsbetriebs mit der gewählten Pulswiederholfrequenz und Pulsintensität bestehenden Spitzenwerts (S) abgesunken ist.

8. Pulslaser mit einer Pumpquelle (5), einem aktiven Lasermaterial (2), einem Güteschalter (3) mit einem Ein-Zustand, in dem er weitgehend lichtdurchlässig und einem Aus-Zustand, indem er weitgehend lichtundurchlässig eingestellt wird, einem Gatesignal (G) zum Umschalten des Pulslasers zwischen inaktivem Betrieb und Pulsbetrieb und einer Erstpulssteuerung (6) zur Steuerung der Erstpulsenergie , **dadurch gekennzeichnet**, daß die Erstpulssteuerung (6) dazu ausgelegt ist,
a. im Moment des Umschaltens des Pulslasers von inaktivem Betrieb auf Pulsbetrieb die Pumpleistung der Pumpquelle (5) auf eine Begrenzungsleistung, bei der die Verluste des Pulslasers die Pumpleistung übersteigen, zu reduzieren,
b. die Triggerung des ersten Laserpulses nach dem Umschalten des Pulslasers von inaktivem Betrieb auf Pulsbetrieb für eine vorgebbare Verzögerungszeit (V) zu verzögern, wobei die Verzögerungszeit (V) so lang gewählt wird, daß die Aufladung des aktiven Lasermaterials(2) innerhalb dieser Verzögerungszeit (V) etwa auf das Niveau des während des Pulsbetriebs bestehenden Spitzenwerts (S) abgesunken ist und
c. nach Ablauf der Verzögerungszeit (V) die Pumpleistung wieder auf volle Leistung zu erhöhen.

9. Pulslaser nach Anspruch 8, **dadurch gekennzeichnet**, daß die Begrenzungsleistung 0% bis 30 % der vollen Pumpleistung beträgt.

10. Pulslaser nach Anspruch 8 oder 9, **dadurch gekennzeichnet**, daß die Pulswiederholfrequenz und/oder die Pulsenergie einstellbar sind und die Erstpulssteuerung (6) dazu ausgelegt ist, die Verzögerungszeit (V) so lang zu wählen, daß die Aufladung des aktiven Lasermaterials (2) innerhalb dieser Verzögerungszeit (V) etwa auf das Niveau des während des Pulsbetriebs mit der gewählten Pulswiederholfrequenz und Pulsenergie bestehenden Spitzenwerts (S) abgesunken ist.

11. Pulslaser mit einer Pumpquelle (5), einem aktiven Lasermaterial (2), einem Güteschalter (3) mit einem Ein-Zustand, in dem er weitgehend lichtdurchlässig und einem Aus-Zustand, indem er weitgehend lichtundurchlässig eingestellt wird, einem Gatesignal (G) zum Umschalten des Pulslasers zwischen inaktivem Betrieb und Pulsbetrieb und einer Erstpulssteuerung (6) zur Steuerung der Erstpulsenergie, **dadurch gekennzeichnet**, daß die Erstpulssteuerung (6) dazu ausgelegt ist,
a. im Moment des Umschaltens des Pulslasers von inaktivem Betrieb auf Pulsbetrieb die Pumpleistung der Pumpquelle (5) auf eine Begrenzungsleistung, bei der die Verluste des Pulslasers die Pumpleistung übersteigen, zu reduzieren,
b. die Triggerung des ersten Laserpulses nach dem Umschalten des Pulslasers von inaktivem Betrieb auf Pulsbetrieb für eine vorgebbare Verzögerungszeit (V) zuzüglich dem zeitlichen Abstand (T) der während des Pulsbetriebs ausgesandten Laserpulse zu verzögern, wobei die Verzögerungszeit (V) mindestens so lang gewählt wird, daß die Aufladung des aktiven Lasermaterials (2) innerhalb dieser Verzögerungszeit (V) etwa auf Null abgesunken ist und
c. nach Ablauf der Verzögerungszeit (V) die Pumpleistung wieder auf volle Leistung zu erhöhen.

12. Pulslaser nach Anspruch 11, **dadurch gekennzeichnet**, daß die Begrenzungsleistung 0% bis 30 % der vollen Pumpleistung beträgt.

13. Pulslaser mit einer Pumpquelle (5), einem aktiven Lasermaterial (2), einem Güteschalter (3), einem Gatesignal (G) zum Umschalten des Pulslasers zwischen inaktivem Betrieb und Pulsbetrieb und einer Erstpulssteuerung (6) zur Begrenzung der Erstpulsenergie, **dadurch gekennzeichnet**, daß die Erstpulssteuerung (6) dazu ausgelegt ist, nach dem Umschalten des Pulslasers auf den Pulsbetrieb in einem ersten Zeitintervall die Aufladung des aktiven Lasermaterials auf einen Startwert (cw) abzubauen, der der Aufladung entspricht, die bei kontinuierlicher Lasertätigkeit vorliegen würde, in einem anschließenden zweiten Zeitintervall das aktive Lasermaterial (2) etwa auf den während des Pulsbetriebs erreichten Spitzenwert (S) aufzuladen und am Ende des zweiten Zeitintervalls den ersten Laserpuls auszulösen.

14. Pulslaser nach Anspruch 13, **dadurch gekennzeichnet**, daß der Abbau der Aufladung des aktiven Lasermaterials (2) durch Prelasing erfolgt, indem die Lichtdurchlässigkeit des Güteschalters (3) in dem ersten Zeitintervall kontinuierlich oder in Schritten erhöht wird.

15. Pulslaser nach Anspruch 13 oder 14, **dadurch gekennzeichnet**, daß der Abbau der Aufladung des aktiven Lasermaterials (2) wenigstens zum Teil durch Reduktion der Leistung der Pumpquelle (5) während mindestens eines Teils des ersten Zeitintervalls erfolgt.

16. Pulslaser nach einem der Ansprüche 13 bis 15, **dadurch gekennzeichnet**, daß die Länge des ersten Zeitintervalls und/oder die Geschwindigkeit der Erhöhung der Lichtdurchlässigkeit des Güteschalters (3) so gewählt ist, daß die Aufladung des aktiven Lasermaterials (2) am Ende des ersten Zeitintervalls aufden Startwert (cw) abgebaut ist.

17. Pulslaser nach einem der Ansprüche 13 bis 15, **dadurch gekennzeichnet**, daß die Länge des ersten Zeitintervalls so gewählt ist, daß die Aufladung des aktiven Lasermaterials (2) mindestens etwa 5% vor dem Ende des ersten Zeitintervalls auf den Startwert (cw) abgebaut ist.

18. Pulslaser nach einem der Ansprüche 13 bis 17, **dadurch gekennzeichnet**, daß die Länge des zweiten Zeitintervalls 80% des zeitlichen Abstands (T) der während des Pulsbetriebs ausgesandten Laserpulse beträgt.

19. Pulslaser nach einem der Ansprüche 13 bis 17, **dadurch gekennzeichnet**, daß die Erstpulssteuerung (6) dazu ausgelegt ist, die Länge des zweiten Zeitintervalls in Abhängigkeit von dem zeitlichen Abstand (T) der während des Pulsbetriebs ausgesandten Laserpulse, deren Energie und der Pumpleistung sowie der gewählten Geschwindigkeit der Erhöhung der Lichtdurchlässigkeit des Güteschalters (3) so einzustellen, daß das aktive Lasermaterial (2) am Ende des zweiten Zeitintervalls etwa auf den Wert aufgeladen wird, der während des Pulsbetriebs als Spitzenwert (P) vorliegt.

20. Pulslaser nach einem der Ansprüche 13 bis 19, **dadurch gekennzeichnet**, daß die Summe der Längen des ersten und zweite Zeitintervalls vorgebbar ist.

21. Pulslaser mit einer Pumpquelle (5), einem aktiven Lasermaterial (2), einem Güteschalter (3) mit einem Ein-Zustand, in dem er weitgehend lichtdurchlässig und einem Aus-Zustand, indem er weitgehend lichtundurchlässig eingestellt wird, einem Gatesignal (G) zum Umschalten des Pulslasers zwischen inaktivem Betrieb und Pulsbetrieb und einer Erstpulssteuerung (6) zur Steuerung der Erstpulsenergie, **dadurch gekennzeichnet**, daß die Erstpulssteuerung (6) dazu ausgelegt ist, ab dem Moment des Umschaltens des Pulslasers von inaktivem Betrieb auf Pulsbetrieb für eine vorgebbare Zeitspanne (V) die Lichtdurchlässigkeit des Güteschalters (3) in seinem Ein-Zustand auf eine Begrenzungsdurchlässigkeit zu reduzieren, wobei die Begrenzungsdurchlässigkeit so gewählt wird, daß die ersten nach dem Umschalten des Pulslasers von inaktivem Betrieb auf Pulsbetrieb ausgesandten Laserpulse etwa die gleiche Energie wie die nachfolgenden Laserpulse besitzen.

22. Pulslaser nach Anspruch 21, **dadurch gekennzeichnet**, daß die Erstpulssteuerung (6) dazu ausgelegt ist, während der vorgebbaren Zeitspanne (V) die Begrenzungsdurchlässigkeit kontinuierlich oder in Schritten von einem wählbaren Minimalwert auf die maximale Lichtdurchlässigkeit des Güteschalters (3) zu erhöhen.

23. Pulslaser nach Anspruch 21 oder 22, **dadurch gekennzeichnet**, daß die Pulswiederholfrequenz und/oder die Pulsenergie einstellbar sind und die Erstpulssteuerung (6) dazu ausgelegt ist, in Abhängigkeit von den eingestellten Werten der Pulswiederholfrequenz und/oder der Pulsenergie die vorgebbaren Zeitspanne (V) und innerhalb dieser Zeitspanne (V) die Begrenzungsdurchlässigkeit so einzustellen, daß jeder der ersten nach dem Umschalten des Pulslasers von inaktivem Betrieb auf Pulsbetrieb ausgesandten Laserpulse etwa die gleiche Energie wie jeder der nachfolgenden Laserpulse besitzt.

24. Pulslaser nach einem der Ansprüche 1 bis 23, **dadurch gekennzeichnet**, daß während des inaktiven Betriebs die Pumpleistung der Pumpquelle (5) auf 95 % bis 50 % der vollen Pumpleistung reduziert ist.

25. Pulslaser nach einem der Ansprüche 1 bis 24, **dadurch gekennzeichnet**, daß der Pulslaser ein diodengepumpter Festkörperlaser ist.

26. Pulslaser nach einem der Ansprüche 1 bis 25, **dadurch gekennzeichnet**, daß der Güteschalter als akustooptischer Schalter (3) ausgebildet ist und seine Lichtdurchlässigkeit über die Höhe der angelegten Hochfrequenzspannung und/oder deren Frequenz beeinflußt wird.

27. Pulslaser nach einem der Ansprüche 1 bis 25, **dadurch gekennzeichnet**, daß der Güteschalter als elektrooptischer Schalter (3) ausgebildet ist und seine Lichtdurchlässigkeit über die Höhe der angelegten Spannung beeinflußt wird.

28. Pulslaser mit einer Pumpquelle (5), einem aktiven Lasermaterial (2), einem Gatesignal (G) zum Umschalten des Pulslasers zwischen inaktivem Betrieb und Pulsbetrieb und einer Erstpulssteuerung (6) zur Steuerung der Erstpulsenergie, **dadurch gekennzeichnet**, daß die Erstpulssteuerung (6) dazu ausgelegt ist, die in dem Lasermaterial (2) vorhandene Aufladung derart einzustellen, daß bei der Auslösung des ersten Laserpulses nur eine Teilmenge der maximalen Aufladung (L = 1) abgebaut wird.

29. Pulslaser nach Anspruch 28, bei dem das Abbauen einer Teilmenge der maximalen Aufladung gemäß den Merkmalen nach einem der Ansprüche 1 bis 27 erfolgt.
